# EUROPEAN PATENT APPLICATION

(11) **EP 2 487 938 A1**
(43) Date of publication of application: **15.08.2012**
(21) Application number: 10844440.7
(22) Date of filing: 10.09.2010
(51) Int. Cl.: H04W 4/06, H04L 29/08, H04H 60/85, H04N 7/24

(54) **METHOD AND APPARATUS FOR DOWNLOADING FILES**

(30) Priority: 26.01.2010 CN 201010103546
(71) Applicant: ZTE Corporation, Shenzhen, Guangdong 518057 (CN)
(72) Inventor: WEN, Hailong, Shenzhen Guangdong 518057 (CN); WANG, Jindong, Shenzhen Guangdong 518057 (CN)
(74) Representative: Davies, Gregory Mark
(86) International application number: PCT/CN2010/076805
(87) International publication number: WO 2011/091663

(57) **Abstract**

The present invention discloses a method and apparatus for download a file which are applied in a mobile multimedia broadcast system, and the method includes: a client displaying broadcast information to a user for the user selecting a file to be downloaded; the client receiving a selection of the user to the file to be downloaded, reading the broadcast information of the file to be downloaded which is selected by the user, and downloading the file to be downloaded locally when a broadcast start time included in the broadcast information of the file to be downloaded arrives. The present invention can make a user complete the file downloading without manual intervention when using a mobile multimedia broadcast service, thereby saving a mass of manual operations of the user and improving service experience of the user.

## Description

### Technical Field

The present invention relates to the field of mobile multimedia broadcast technology, and particularly, to a method and apparatus for downloading a file.

### Background of the Related Art

The mobile multimedia broadcast service (also called as mobile television) has various implementation technologies, including Multimedia Broadcast Multicast Service (MBMS) technology, Broadcast and Multicast Service (BCMCS) technology and stream media technology which are based on the mobile communication network, and technologies based on the broadcast network (Terrestrial digital broadcasting, satellite digital broadcasting, and so on). The mobile multimedia service based on the broadcast network has advantages of high spectrum utilization, large capacity, relatively low construction cost, wide audience, and so on, and has been widely applied.

The mobile multimedia broadcast mainly has two categories of services, audio and video broadcast service and data broadcast service. The data broadcast service can be subdivided into file download class service (such as mobile newspaper, film and television clips, humor short film, news/sports programs, etc.) and real-time data stream service (such as stock and traffic navigation).

When using the television and real-time data stream services, the user needs to navigate by a program guide firstly, and selects a program needed to be watched; a client calls a corresponding player to execute the corresponding business service, so as to provide the service for the user. However, unlike the television display and real-time data stream services, the download class service does not need real-time concerns from the user, and if performing in accordance with the above mode, the great inconvenience will be brought to the service use of the user, for example:
➢ the user can not remember that what file a multimedia broadcast broadcasts at what time, therefore, the user needs to view a file broadcasting program table from time to time, and manually switches to the corresponding channel to download the file according to his/her subscribed file or issued time of the column; if the file is issued at night, the user has to operate the client to download at night, and if the user subscribes multiple files which are issued at different time, the user also must perform manual operation for many times;
➢ when in a state of file downloading, the user has to wait the completion of the file downloading and then manually quits the corresponding channel, which causes considerable limitation to the user's use.

### Summary of the Invention

The technical problem solved by the present invention is to provide a method and an apparatus for downloading a file, to solve a problem that manual intervention is required for downloading the file in a mobile multiple broadcast service, and realize downloading the file during a file broadcasting time without the manual intervention.

In order to solve the above technical problem, the present invention provides a method for downloading a file, applied in a mobile multimedia broadcast system, and the method comprises:
a client displaying broadcast information to a user for the user selecting a file to be downloaded; and
the client receiving a selection of the user to the file to be downloaded, reading the broadcast information of the file to be downloaded which is selected by the user, and downloading the file to be downloaded locally when a broadcast start time included in the broadcast information of the file to be downloaded arrives.

The step of the client displaying the broadcast information to the user comprises:
the client extracting a time schedule table from a received electronic program guide, extracting the broadcast information from the time schedule table, generating a customized interface, and displaying the extracted broadcast information to the user in the customized interface.

The step of the client reading the broadcast information of the file to be downloaded which is selected by the user comprises:
after the user selects the file to be downloaded on the customized interface according to the displayed broadcast information, the client reading the broadcast information of the file to be downloaded which is selected by the user from the extracted broadcast information, and storing the broadcast information of the file to be downloaded which is selected by the user in a file downloading setting table.

The step of the client downloading the file to be downloaded locally when the broadcast start time arrives comprises:
the client correspondingly configuring and initiating a timer according to the broadcast start time included in the broadcast information of each file to be downloaded that is stored in the file downloading setting table, wherein timing end time of the timer is the broadcast start time of the corresponding file to be downloaded; and
when the timing of the timer is over, the client calling a file downloading unit, switching to a broadcast channel of the corresponding file to be downloaded, and downloading the file to be downloaded locally.

Before the step of the client storing the broadcast information of the file to be downloaded which is selected by the user in the file downloading setting table, the above method further comprises:
the client judging whether the user has subscribed the selected file to be downloaded, if the user has subscribed the selected file to be downloaded, executing the step of storing the broadcast information of the file to be downloaded which is selected by the user in the file downloading setting table; if the user does not subscribe the selected file to be downloaded, prompting the user that the selected file to be downloaded has not been subscribed.

The step of the client judging whether the user has subscribed the selected file to be downloaded comprises: the client judging whether the user has subscribed the selected file to be downloaded by querying mobile multimedia broadcast authority information in a certification authorization card or a subscriber identification module card.

The step of the client downloading the file to be downloaded locally when the broadcast start time arrives comprises:
the client scanning the file downloading setting table every other time period, and when the broadcast start time of the file to be downloaded arrives, calling a file downloading unit, switching to a broadcast channel of the corresponding file to be downloaded, and downloading the file to be downloaded locally.

In order to solve the above technical problem, the present invention also provides an apparatus for downloading a file, applied in a mobile multimedia broadcast system, and the apparatus comprises: a control unit, a broadcast information displaying unit, a file downloading unit, a user interface unit and a storage unit, wherein:
the broadcast information displaying unit is configured to store broadcast information, and display the broadcast information to a user, for user to selecting a file to be downloaded;
the user interface unit is connected with the control unit and is configured to receive a selection for the user to the file to be downloaded, and notify the control unit of the file to be downloaded which is selected by the user;
the control unit is connected with the user interface unit, the broadcast information displaying unit and the file downloading unit and is configured to: after acquiring the file to be downloaded which is selected by the user, read the broadcast information of the file to be downloaded from the broadcast information displaying unit, and call the file downloading unit when broadcast start time included in the broadcast information of the file to be downloaded arrives;
the file downloading unit is connected with the control unit and the storage unit and is configured to download the file to be downloaded in the storage unit under the calling by the control unit.

The broadcast information displaying unit is configured to display the broadcast information to the user by the following way of:
extracting a schedule from a received electronic program guide, extracting the broadcast information from the time schedule table, generating a customized interface, and displaying the extracted broadcast information to the user in the customized interface.

The control unit is configured to call the file downloading unit when the broadcast start time included in the broadcast information of the file to be downloaded arrives by the following way of:
after reading the broadcast information of the file to be downloaded from the broadcast information displaying unit, storing that broadcast information in a file downloading setting table, and correspondingly configuring and initiating a timer according to the broadcast start time included in the broadcast information of each file to be downloaded that is stored in the file downloading setting table, wherein the timing end time of the timer is the broadcast start time of the corresponding file to be downloaded; and when the timing of the timer is over, calling the file downloading unit.

In conclusion, according to the present invention, selection is provided to the user based on a schedule, and the file is downloaded in the broadcasting time of the file which is selected by the user, to allow the user finish the file downloading without manual intervention when using a mobile multimedia broadcast service, which saves a mass of manual operations of the user and improving service experience of the user. The method of the present invention is applied to various mobile multimedia broadcast systems. In order to make full use of network resources, many mobile multimedia broadcast systems usually broadcast files at night when the network is relatively idle. After the user subscribes the file, the terminal can download the corresponding file by itself without user's participation, which will not affect the user's rest.

### Brief Description of Drawings

FIG. 1 is a flow chart of a method for downloading a file according to the present invention;
FIG. 2 is a schematic diagram of a customized interface adopted in the present invention;
FIG. 3 is a schematic diagram of a user selecting a file to be downloaded on a customized interface according to the present invention; and
FIG. 4 is an architecture diagram of an apparatus for downloading a file according to an embodiment of the present invention.

### Preferred Embodiments of the Present Invention

In a mobile multimedia broadcast service, ESG (Electronic Service Guide, which is also called as: Electronic Program Guide) is a information navigation service of multimedia broadcast. A user can understand relevant information of the mobile multimedia broadcast service by the electronic service guide. A schedule is included in the ESG, and the schedule includes information of broadcast start time and broadcast duration, etc., of files of various applications, such as mobile newspaper, audio and video clips, etc., in the file downloading service.

In the present embodiment, a client provides a customized interface of a file downloading service for the user, and the customized interface is based on a time schedule table. The user can select a favorite or concerned file, and the client stores the broadcast information of the file to be downloaded that is selected by the user into a file downloading setting table. When a broadcast start time of a certain file to be downloaded which is selected and received by the user arrives, the client calls a file downloading unit, switches to a corresponding channel and downloads the file.

When the file downloading is finished, the client stores the downloaded file in a local storage medium and closes the file downloading unit, and meanwhile displays a prompt identification (similar to an identification for receiving a short message or a multimedia message) to prompt the user that a new file is received. When the user selects to view the file, the user may enter a file downloading directory and open the corresponding file to read or display.

A specific embodiment of the present invention will be described in detail in combination with the accompanying drawings in the following.

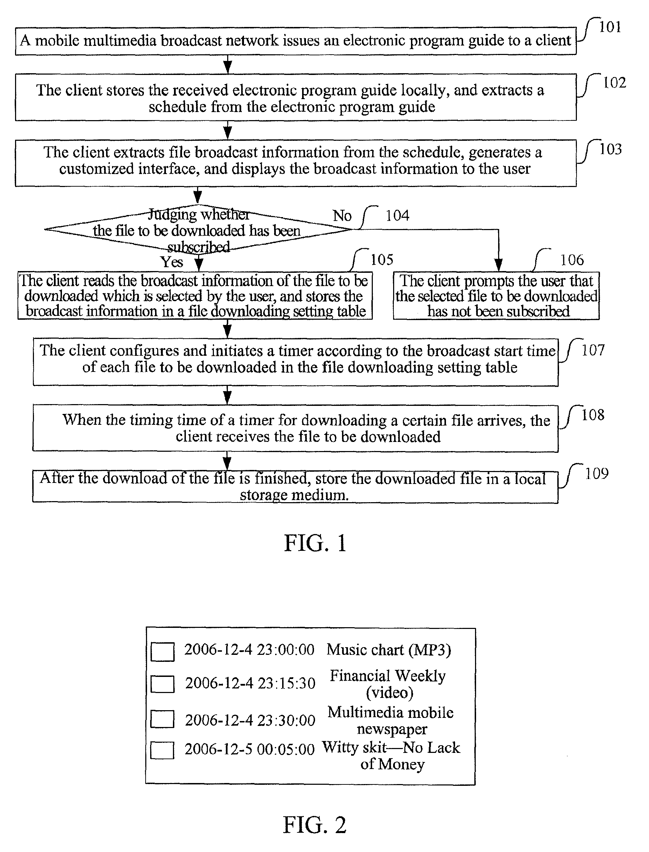

FIG. 1 is a method for downloading a file according to an embodiment of the present invention, and the method comprises the following steps.

In step 101, a mobile multimedia broadcast network issues an electronic program guide to a mobile multimedia client (called client for short).

In step 102, the client stores the received electronic program guide locally, and extracts a schedule from the electronic program guide.

It is assumed that a schedule issued a certain time of a certain day includes the following file broadcast information:
Start time: 23:00:00, December 4, 2006; Duration: 930 seconds; Language: Chinese; Subject Length: 17 bytes; Subject: music chart (MP3);
Start time: 23:15:30, December 4, 2006; Duration: 870 seconds; Language: Chinese; Subject Length: 16 bytes; Subject: Financial Weekly (video);
Start time: 23:30:00, December 4, 2006; Duration: 180 seconds; Language: Chinese; Subject Length: 14 bytes; Subject: Multimedia Mobile Newspaper;
Start time: 00:05:00, December 5, 2006; Duration: 1380 seconds; Language: Chinese; Subject Length: 12 bytes; Subject: Witty skit-No Lack of Money;

In step 103, the client extracts the file broadcast information from the schedule, generates a customized interface, and displays the extracted broadcast information to the user in the customized interface, for the user selecting the file that the user wants to download (the file to be downloaded).

FIG. 2 is a customized interface generated by the client extracting the file broadcast information from the schedule. The customized interface comprises multiple pieces of file broadcast information, and each piece of the file broadcast information includes: main description information of the file, such as subject and start time, etc.

The above schedule generally adopts an XML (Extensible Markup Language) format. The client may read the corresponding field from the schedule with the XML format by an inner file parser, and the content of the field is the file broadcast information.

In step 104, the user selects a file to be downloaded, and the client judges whether the file to be downloaded which is selected by the user has been subscribed, if yes, step 105 is executed; and if no, step 106 is executed.

The client can judge whether the user has subscribed a certain file by querying mobile multimedia broadcast authority information in a CA (certification authorization) card or an SIM (subscriber identification module) card.

In step 105, the client reads the broadcast information of the file to be downloaded which is selected by the user, and stores the broadcast information in a file downloading setting table, and step 107 is executed.

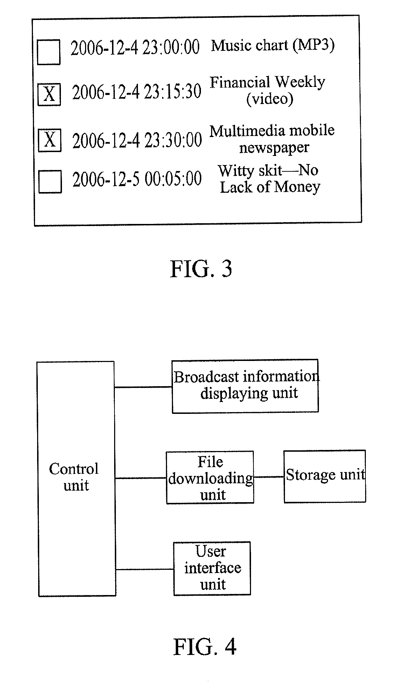

As shown in FIG. 3, for example, the user is interested in the above-mentioned two downloading services of Financial Weekly (video) and Multimedia mobile newspaper, and selects them; and if the user has subscribed the two downloading services, the client stores the broadcast information of the two services to be downloaded which are selected by the user in the file downloading setting table.

In step 106, the client prompts the user that the selected file to be downloaded has not been subscribed and is needed to be subscribed at the operator, and meanwhile displays that the file cannot be selected.

In step 107, the client configures and initiates a timer according to the broadcast start time of each file to be downloaded in the file downloading setting table, in order to trigger downloading when the file starts to broadcast.

In this embodiment, the timer of the Financial Weekly (video) is set to end at 23:15:30, December 4, 2006, and the timer of the Multimedia Mobile Newspaper is set to end at 23:30:00, December 4, 2006.

In step 108, when the timing time of the timer of a certain file is over, the client calls the file downloading unit, switches to a broadcast channel of the downloaded file, and receives the file to be downloaded.

Moreover, the timer may not be adopted, the client scans the file downloading setting table once every other time period (such as 1 second), when a broadcast start time of a certain file to be downloaded arrives, the client calls the file downloading unit and switches to the broadcast channel of the corresponding file to be downloaded, and downloads the file to be downloaded locally.

In this embodiment, the client triggers the file downloading unit and starts to download the Financial Weekly (video) and the Multimedia Mobile Newspaper at 23:15:30, December 4, 2006 and 23:30:00, December 4, 2006 respectively.

In step 109, after the download of the file is finished, the client closes the file downloading unit and stores the downloaded file in a local storage medium.

When the file is stored locally, the displayed file name of the file rather than the physical file name of the file is acted as the stored file name; for example, it is implemented that the displayed file name "Morning news at 7 o'clock" corresponds to the physical file name "news7.3gp", so as to facilitate the user to view and maintain the file.

The client may display an obvious identification on an display screen after completing the file downloading, to prompt the user that a new file is received; for example, an envelop icon, a subject and an operation prompt can be displayed, to prompt the user that the Financial Weekly (video)/Multimedia Mobile Newspaper is received. The operation prompt can be "Watch at once" and "Cancel", etc., so that the user selects to either watch it at once or cancel and then query and watch, and the like. Additional operations of the user, such as deleting, modifying the subject and forwarding in form of multimedia message, etc., can also be set.

FIG. 4 shows an apparatus for downloading a file according to the present invention, and the apparatus comprises: a control unit, a broadcast information displaying unit, a file downloading unit, a user interface unit and a storage unit, wherein:

the broadcast information displaying unit is used to receive an electronic program guide from a multimedia broadcast network, extract a schedule from the electronic program guide, extract the file broadcast information from the schedule and store the file broadcast information generate a customized interface, and display the extracted broadcast information to a user in the customized interface, for the user selecting the file that the user wants to download (the file to be downloaded).

The schedule generally adopts an XML format. The broadcast information displaying unit can read the corresponding field from the schedule with the XML format by a file parser, wherein the content of the field is the file broadcast information.

The user interface unit is connected with the control unit and is used to receive a selection of the user to the file to be downloaded, and notify the control unit of the file to be downloaded which is selected by the user.

The control unit is further connected with the broadcast information displaying unit and the file downloading unit and is used to judge whether the file to be downloaded which is selected by the user has been subscribed after acquiring the file to be downloaded which is selected by the user; if the file has been subscribed, read the broadcast information of the file to be downloaded from the broadcast information displaying unit, store it in a file downloading setting table, and correspondingly configure and initiate a timer according to the broadcast start time included in the broadcast information of each file to be downloaded that is stored in the file downloading setting table, wherein the timing end time of the timer is the broadcast start time of the corresponding file to be downloaded, and when the timing of the timer is over, call the file downloading unit; if the file has not been subscribed, prompt the user that the selected file to be downloaded has not been subscribed and is needed to be subscribed at the operator, and meanwhile display that the file cannot be selected.

Moreover, the control unit is also able to not adopt the timer, but scans the file downloading setting table once every other time period (such as 1 second), and when the broadcast start time of a certain file to be downloaded arrives, the control unit calls the file downloading unit.

The control unit can judge whether the user has subscribed a file by querying the mobile multimedia broadcast authority information in a CA card or a SIM card.

The file downloading unit is further connected with the storage unit and is used to download the file to be downloaded in the storage unit under the calling by the control unit.

Other functions of each function unit in the apparatus of the present embodiment please refer to the description of the method content.

Although the preferred embodiments of the present invention are disclosed already for the exemplary purpose, those skilled in the art will appreciate that various improvements, additions and alternatives are probable. Therefore, the scope of the present invention should not be limited to the above embodiments.

Those of ordinary skill in the art can understand that all of or part of steps of the above-mentioned method can be completed by programs instructing the relevant hardware, and the programs can be stored in a computer readable storage medium, such as a read only memory, a magnetic disk or a compact disk, etc. Alternatively, all of or part of steps of the above-mentioned embodiments can also be implemented by using one or more integrated circuits. Correspondingly, each module/unit in the above-mentioned embodiments can be implemented in form of hardware, or can be implemented in form of software function module. The present invention is not limited to any particular form of the combination of hardware and software.

### Industrial Applicability

According to the present invention, selection is provided to the user based on a schedule, and the file is downloaded in the broadcasting time of the file which is selected by the user, to allow the user finish the file downloading without manual intervention when using a mobile multimedia broadcast service, which saves a mass of manual operations of the user and improving service experience of the user. The method of the present invention is applied to various mobile multimedia broadcast systems. In order to make full use of network resources, many mobile multimedia broadcast systems usually broadcast files at night when the network is relatively idle. After the user subscribes the file, the terminal can download the corresponding file by itself without user's participation, which will not affect the user's rest.

## Claims

1. A method for downloading a file, applied in a mobile multimedia broadcast system, comprising:
a client displaying broadcast information to a user for the user selecting a file to be downloaded; and
the client receiving a selection of the user to the file to be downloaded, reading the broadcast information of the file to be downloaded which is selected by the user, and downloading the file to be downloaded locally when a broadcast start time included in the broadcast information of the file to be downloaded arrives.

2. The method according to claim 1, wherein, the step of the client displaying the broadcast information to the user comprises:
the client extracting a time schedule table from a received electronic program guide, extracting the broadcast information from the time schedule table, generating a customized interface, and displaying the extracted broadcast information to the user in the customized interface.

3. The method according to claim 2, wherein, the step of the client reading the broadcast information of the file to be downloaded which is selected by the user comprises:
after the user selects the file to be downloaded on the customized interface according to the displayed broadcast information, the client reading the broadcast information of the file to be downloaded which is selected by the user from the extracted broadcast information, and storing the broadcast information of the file to be downloaded which is selected by the user in a file downloading setting table.

4. The method according to claim 3, wherein, the step of the client downloading the file to be downloaded locally when the broadcast start time arrives comprises:
the client correspondingly configuring and initiating a timer according to the broadcast start time included in the broadcast information of each file to be downloaded that is stored in the file downloading setting table, wherein timing end time of the timer is the broadcast start time of the corresponding file to be downloaded; and
when the timing of the timer is over, the client calling a file downloading unit, switching to a broadcast channel of the corresponding file to be downloaded, and downloading the file to be downloaded locally.

5. The method according to claim 3, wherein, before the step of the client storing the broadcast information of the file to be downloaded which is selected by the user in the file downloading setting table, the method further comprises:
the client judging whether the user has subscribed the selected file to be downloaded, if the user has subscribed the selected file to be downloaded, executing the step of storing the broadcast information of the file to be downloaded which is selected by the user in the file downloading setting table; if the user does not subscribe the selected file to be downloaded, prompting the user that the selected file to be downloaded has not been subscribed.

6. The method according to claim 5, wherein,
the step of the client judging whether the user has subscribed the selected file to be downloaded comprises: the client judging whether the user has subscribed the selected file to be downloaded by querying mobile multimedia broadcast authority information in a certification authorization card or a subscriber identification module card.

7. The method according to claim 3, wherein, the step of the client downloading the file to be downloaded locally when the broadcast start time arrives comprises:
the client scanning the file downloading setting table every other time period, and when the broadcast start time of the file to be downloaded arrives, calling a file downloading unit, switching to a broadcast channel of the corresponding file to be downloaded, and downloading the file to be downloaded locally.

8. An apparatus for downloading a file, applied in a mobile multimedia broadcast system, comprising: a control unit, a broadcast information displaying unit, a file downloading unit, a user interface unit and a storage unit, wherein:
the broadcast information displaying unit is configured to store broadcast information, and display the broadcast information to a user, for user to selecting a file to be downloaded;
the user interface unit is connected with the control unit and is configured to receive a selection for the user to the file to be downloaded, and notify the control unit of the file to be downloaded which is selected by the user;
the control unit is connected with the user interface unit, the broadcast information displaying unit and the file downloading unit and is configured to: after acquiring the file to be downloaded which is selected by the user, read the broadcast information of the file to be downloaded from the broadcast information displaying unit, and call the file downloading unit when broadcast start time included in the broadcast information of the file to be downloaded arrives;
the file downloading unit is connected with the control unit and the storage unit and is configured to download the file to be downloaded in the storage unit under the calling by the control unit.

9. The apparatus according to claim 8, wherein, the broadcast information displaying unit is configured to display the broadcast information to the user by the following way of:
extracting a schedule from a received electronic program guide, extracting the broadcast information from the time schedule table, generating a customized interface, and displaying the extracted broadcast information to the user in the customized interface.

10. The apparatus according to claim 8, wherein, the control unit is configured to call the file downloading unit when the broadcast start time included in the broadcast information of the file to be downloaded arrives by the following way of:
after reading the broadcast information of the file to be downloaded from the broadcast information displaying unit, storing that broadcast information in a file downloading setting table, and correspondingly configuring and initiating a timer according to the broadcast start time included in the broadcast information of each file to be downloaded that is stored in the file downloading setting table, wherein the timing end time of the timer is the broadcast start time of the corresponding file to be downloaded; and when the timing of the timer is over, calling the file downloading unit.
